(19) Europäisches Patentamt
European Patent Office
Office européen des brevets

(11) **EP 3 943 221 B1**

(12) **EUROPEAN PATENT SPECIFICATION**

(45) Date of publication and mention
of the grant of the patent:
**03.01.2024 Bulletin 2024/01**

(21) Application number: **20772765.2**

(22) Date of filing: **25.02.2020**

(51) International Patent Classification (IPC):
*F16C 33/66* *(2006.01)*    *F16C 19/52* *(2006.01)*
*F16C 19/54* *(2006.01)*    *F16C 41/00* *(2006.01)*
*B23Q 17/09* *(2006.01)*    *B23Q 11/12* *(2006.01)*
*F16N 7/38* *(2006.01)*    *F16C 33/30* *(2006.01)*

(52) Cooperative Patent Classification (CPC):
**B23Q 11/123; B23Q 17/0985; F16C 19/522;**
**F16C 19/525; F16C 19/546; F16C 33/6659;**
**F16C 33/6674; F16C 41/004; F16N 7/38;**
F16C 33/303; F16C 2233/00; F16N 2210/14

(86) International application number:
**PCT/JP2020/007450**

(87) International publication number:
**WO 2020/189188 (24.09.2020 Gazette 2020/39)**

(54) **LUBRICATING OIL SUPPLY UNIT AND BEARING DEVICE**

SCHMIERÖLZUFÜHRUNGSEINHEIT UND LAGERVORRICHTUNG

UNITÉ D'ALIMENTATION EN HUILE LUBRIFIANTE ET DISPOSITIF DE ROULEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.03.2019 JP 2019051665**
**12.07.2019 JP 2019129748**

(43) Date of publication of application:
**26.01.2022 Bulletin 2022/04**

(73) Proprietor: **NTN Corporation**
**Osaka-shi, Osaka 550-0003 (JP)**

(72) Inventor: **HASHIZUME, Shohei**
**Kuwana-shi, Mie 511-8678 (JP)**

(74) Representative: **Bockhorni & Brüntjen**
**Partnerschaft**
**Patentanwälte mbB**
**Agnes-Bernauer-Straße 88**
**80687 München (DE)**

(56) References cited:
**WO-A1-2018/088227**    **WO-A1-2018/088227**
**JP-A- 2013 213 585**    **JP-A- 2015 014 586**
**JP-A- 2017 191 019**    **JP-A- 2018 128 027**
**JP-A- 2018 128 027**    **US-A1- 2017 291 204**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

This invention relates to a lubricating oil supply unit that supplies lubricating oil to a bearing apparatus that rotatably supports a main spindle or the like of a machine tool and a bearing apparatus including the same.

BACKGROUND ART

A bearing for a main spindle of a machine tool is often used at a high speed and under low load, and an angular contact ball bearing is widely employed for such a bearing. The bearing for the main spindle of the machine tool is lubricated by air-oil (oil-mist) lubrication or grease lubrication. Air-oil lubrication is characterized in ability to maintain a stable lubricated state for a long period of time because of external supply of lubricating oil. Grease lubrication is characterized in excellent cost efficiency because of requirement of neither of an annexed facility and a pipe and in environmental friendliness because of an extremely small amount of generation of mist.

A bearing used in a higher-speed region such as a region where a dn value calculated by multiplying an inner diameter of an inner ring by the number of rotations is equal to or larger than one million as in a main spindle of a machining center among machine tools should operate in a more stable manner. For various factors described below, however, the bearing may undergo surface roughening or peeling at a bearing raceway surface or abnormality of a retainer, and thereafter a temperature of the bearing may excessively increase.

- Inappropriate feed and drain of lubricating oil in air-oil lubrication (excessively small or large amount of oil or insufficient exhaust)
- Deterioration of lubricating grease sealed in bearing
- Entry of coolant or water or a foreign matter into a bearing rolling portion
- Oil film rupture due to excessive preload, that is, increase in contact pressure in rolling portion

In order to prevent excessive temperature increase in the bearing due to the above factors, Japanese Patent Laying-Open No. 2017-26078 (PTL 1) discloses such a technique that a lubrication oil feed pump and a contactless temperature sensor are contained in a spacer adjacent to a bearing and the lubrication oil feed pump feeds lubricating oil to the inside of the bearing in accordance with a temperature value of a bearing lubricated portion measured by the temperature sensor.

WO 2018/088227 A1 discloses a bearing device which is provided with an angular ball bearing, an outer ring spacer, an inner ring spacer, and a supply unit which is arranged between the outer ring spacer and the inner ring spacer and which supplies lubricating oil to a gap between an outer race and a cage of the angular ball bearing. The supply unit is arranged inside of the aforementioned gap and, as a nozzle, includes a discharge tube having a discharge port for discharging lubricating oil.

CITATION LIST

PATENT LITERATURE

   PTL 1: Japanese Patent Laying-Open No. 2017-26078
   PTL 2: WO 2018/088227 A1

SUMMARY OF INVENTION

TECHNICAL PROBLEM

In general, in air-oil lubrication, oil mist is generated by intermittently adding in an air feed path, oil from an oil valve to constantly supplied compressed air.

When an amount of added oil is insufficient, friction force increases in a bearing, which results in seizure. When an amount of added oil is excessively large, on the other hand, agitation resistance of oil in a bearing portion increases, which results in temperature increase and seizure. Since a range of an appropriate amount of oil is relatively narrow for a bearing that supports a shaft that rotates at a high speed, it is difficult to add an appropriate amount of oil in air-oil lubrication.

Though a manufacturer indicates a recommended condition for an amount of added oil, an appropriate amount of oil also varies depending on an operating condition of a machine tool or the like. For example, when an operating condition such as a rotation speed, a duration of continuous operation, load at the time of working of a workpiece, or a position of a shaft during working varies, addition by a uniform amount is unable to address such variation.

The amount of addition in an oil valve (a mixing valve) may be regulated while a state of the bearing is monitored. The oil valve, however, is often arranged at a location in an air passage relatively distant from the bearing because oil is supplied to the bearing as being finely cut into fine particles after it is dripped, and there is a time lag from dripping of oil from the oil valve until spread of oil over the bearing. Therefore, addition of oil after change in state of the bearing is too late for lubrication.

The present invention was made to solve the problems above, and an object thereof is to provide a lubricating oil supply unit that supplies lubricating oil to a bearing at appropriate timing and a bearing apparatus including the same.

SOLUTION TO PROBLEM

The present disclosure relates to a lubricating oil supply unit. The lubricating oil supply unit includes a holding portion in which lubricating oil is held, a supply portion that supplies lubricating oil held in the holding portion to a bearing, a heat flux sensor provided in the bearing or a spacer adjacent to the bearing, and a controller that controls operations of the supply portion in accordance with an output from the heat flux sensor. The holding portion, the supply portion, and the controller are arranged in the spacer. The spacer is provided with a lubricating oil passage for air-oil lubrication separately from lubrication with lubricating oil in the holding portion. When the controller detects insufficiency of lubricating oil supplied to the bearing by the air-oil lubrication based on the output from the heat flux sensor, the controller drives the supply portion to add lubricating oil.

Preferably, the controller drives the supply portion to supply lubricating oil to the bearing when a rate of change in heat flux detected by the heat flux sensor exceeds a judgment criterion value.

Preferably, the controller drives the supply portion to supply lubricating oil to the bearing when a heat flux detected by the heat flux sensor exceeds a judgment criterion value.

Preferably, the bearing is lubricated with grease, and when the controller detects insufficiency of base oil of the grease based on the output from the heat flux sensor, the controller controls the supply portion to add lubricating oil.

Preferably, the lubricating oil supply unit further includes a load sensor that detects preload applied to the bearing or external load. The controller controls operation of the supply portion in accordance with an output from the load sensor.

In another aspect, the present disclosure relates to a bearing apparatus including the lubricating oil supply unit described in any section above and a bearing.

ADVANTAGEOUS EFFECTS OF INVENTION

According to this construction, a heat flux sensor is used for measuring variation in temperature in the inside of the bearing while the bearing operates. Therefore, a sign of abnormality of the bearing can be sensed without delay, and lubricating oil can be supplied to the bearing at appropriate timing.

BRIEF DESCRIPTION OF DRAWINGS

Fig. 1 is a cross-sectional view showing a schematic construction of a spindle apparatus in a first embodiment.
Fig. 2 is a schematic cross-sectional view showing a construction of a bearing apparatus 30 according to the first embodiment incorporated in the spindle apparatus.
Fig. 3 is a diagram schematically showing a cross-section III of a spacer in Fig. 2.
Fig. 4 is a diagram schematically showing a cross-section IV of the spacer in Fig. 2.
Fig. 5 is an enlarged cross-sectional view of a lubricating oil supply unit 40.
Fig. 6 is a block diagram showing a construction of lubricating oil supply unit 40 in the first embodiment.
Fig. 7 is a diagram showing a structure of a tester.
Fig. 8 is a diagram showing a test condition in a performance evaluation test.
Fig. 9 is a diagram showing various sensor outputs in the bearing apparatus in the performance evaluation test.
Fig. 10 is a diagram showing relation among a heat flux, a temperature, and a rotation speed in an acceleration and slowdown test.
Fig. 11 is an enlarged view of the abscissa in a section from t1 to t2 in Fig. 10.
Fig. 12 is a diagram showing relation of an amount of oil supplied to a bearing with a temperature and friction loss.
Fig. 13 is a diagram showing relation between an oil pump unit for air-oil lubrication and the lubricating oil supply unit in the spacer.
Fig. 14 is a diagram showing a condition in a test in which abnormality in a bearing due to run-out of lubricating oil is simulated.
Fig. 15 is a diagram showing relation among a heat flux, a temperature, and a rotation speed in a test in which abnormality in a bearing due to run-out of lubricating oil is simulated.
Fig. 16 is a waveform diagram for illustrating an operation by the bearing apparatus in the first embodiment.
Fig. 17 is a waveform diagram for illustrating a state in an evaluation test in which actual bearing seizure is simulated.
Fig. 18 is a flowchart for illustrating control of supply of lubricating oil by a controller.
Fig. 19 is a waveform diagram of an output signal from a heat flux sensor when spike-like noise is not being produced.
Fig. 20 is a waveform diagram of an output signal from the heat flux sensor when spike-like noise is being produced.
Fig. 21 is a diagram showing a section around spike noise in Fig. 20 as being enlarged.
Fig. 22 is a flowchart for illustrating control in which an upper limit value is applied.
Fig. 23 is a schematic cross-sectional view showing a construction of a bearing apparatus in a second embodiment.
Fig. 24 is a diagram schematically showing a cross-section XXIV of the spacer in Fig. 23.
Fig. 25 is a diagram schematically showing a cross-section XXV of the spacer in Fig. 23.

Fig. 26 is a block diagram showing a construction of a lubricating oil supply unit 140 in the second embodiment.

Fig. 27 is a diagram showing first exemplary arrangement of the heat flux sensor.

Fig. 28 is a diagram showing second exemplary arrangement of the heat flux sensor.

Fig. 29 is a diagram showing third exemplary arrangement of the heat flux sensor.

Fig. 30 is a diagram showing fourth exemplary arrangement of the heat flux sensor.

Fig. 31 is a diagram showing fifth exemplary arrangement of the heat flux sensor.

Fig. 32 is a diagram showing sixth exemplary arrangement of the heat flux sensor.

Fig. 33 is a cross-sectional view in a cross-section XXXIII in Fig. 32.

DESCRIPTION OF EMBODIMENTS

An embodiment of the present invention will be described below with reference to the drawings. The same or corresponding elements in the drawings below have the same reference characters allotted and description thereof will not be repeated.

[First Embodiment]

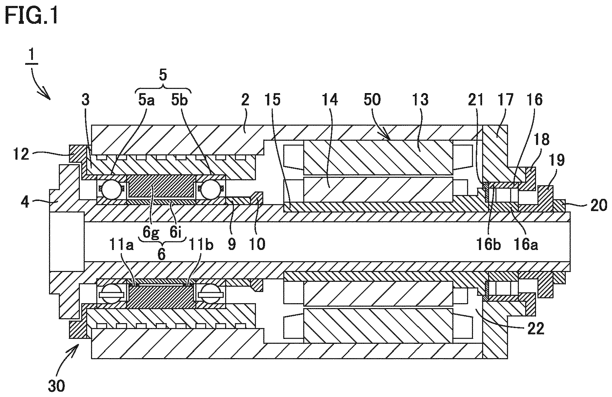

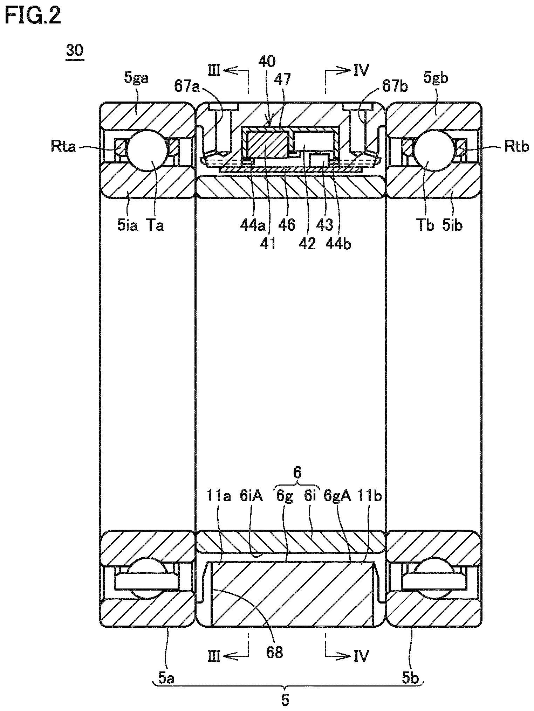

Fig. 1 is a cross-sectional view showing a schematic construction of a spindle apparatus in a first embodiment. Fig. 2 is a schematic cross-sectional view showing a construction of a bearing apparatus 30 according to the first embodiment incorporated in the spindle apparatus.

Spindle apparatus 1 shown in Fig. 1 is used, for example, as a built-in motor type spindle apparatus of a machine tool. In this case, a motor 50 is incorporated on one end side of a main spindle 4 supported by spindle apparatus 1 for a main spindle of a machine tool, and a not-shown cutting tool such as an end mill is connected to the other end.

Spindle apparatus 1 includes bearings 5a and 5b, a spacer 6 arranged adjacently to bearings 5a and 5b, heat flux sensors 11a and 11b, motor 50, and a bearing 16 arranged in the rear of the motor. Main spindle 4 is rotatably supported by a plurality of bearings 5a and 5b provided in a housing 3 embedded in an inside portion of a bearing jacket 2. Bearing 5a includes an inner ring 5ia, an outer ring 5ga, a rolling element Ta, and a retainer Rta. Bearing 5b includes an inner ring 5ib, an outer ring 5gb, a rolling element Tb, and a retainer Rtb. Spacer 6 includes an inner-ring spacer 6i and an outer-ring spacer 6g.

Heat flux sensors 11a and 11b that measure a heat flux are fixed to an inside surface 6gA of outer-ring spacer 6g and are opposed to an outside surface 6iA of inner-ring spacer 6i. The heat flux refers to a quantity of heat that passes through a unit area per unit time.

Inner ring 5ia of bearing 5a and inner ring Sib of bearing 5b that are distant in an axial direction are fitted to main spindle 4 by interference fit (press-fitting). Inner-ring spacer 6i is arranged between inner rings 5ia and Sib and outer-ring spacer 6g is arranged between outer rings 5ga and 5gb.

Bearing 5a is a rolling bearing in which a plurality of rolling elements Ta are arranged between inner ring 5ia and outer ring 5ga. Intervals between rolling elements Ta are held by retainer Rta. Bearing 5b is a rolling bearing in which a plurality of rolling elements Tb are arranged between inner ring 5ib and outer ring 5gb. Intervals between rolling elements Tb are held by retainer Rtb.

An angular contact ball bearing, a deep groove ball bearing, or a tapered roller bearing can be employed as bearings 5a and 5b. The angular contact ball bearing is included in bearing apparatus 30 shown in Fig. 2, where two bearings 5a and 5b are provided in back-to-back duplex bearing (DB) arrangement.

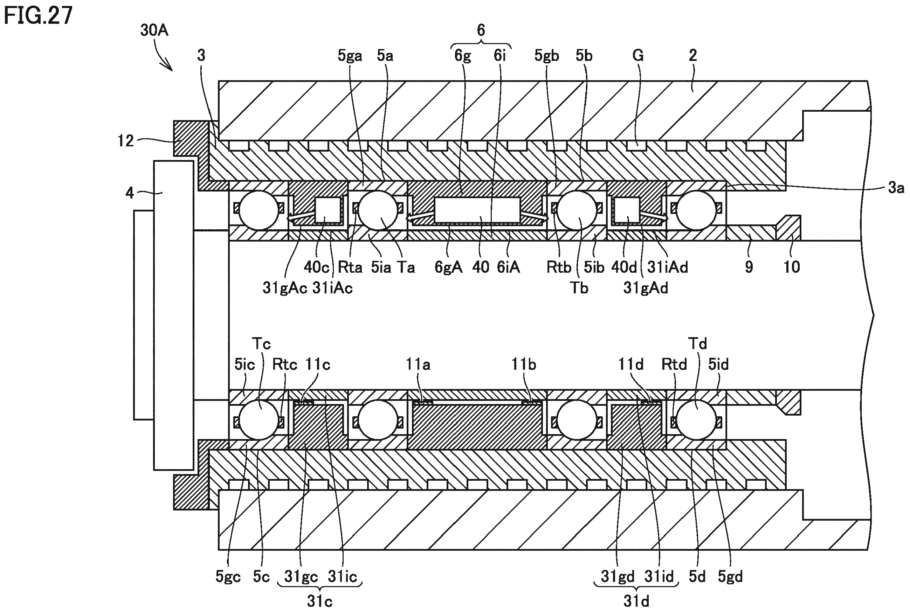

Though a structure in which two bearings 5a and 5b support main spindle 4 is illustrated and described, a structure in which two or more bearings support main spindle 4 may be applicable as shown later in an example in Fig. 27 where four bearings are included.

Single-row rolling bearing 16 is a cylindrical roller bearing. Bearings 5a and 5b which are angular contact ball bearings support radial load and axial load applied to spindle apparatus 1. Single-row bearing 16 which is the cylindrical roller bearing supports radial load applied to spindle apparatus 1 for the main spindle of the machine tool.

A cooling medium flow channel is provided in housing 3. By feeding a cooling medium between housing 3 and bearing jacket 2, bearings 5a and 5b can be cooled.

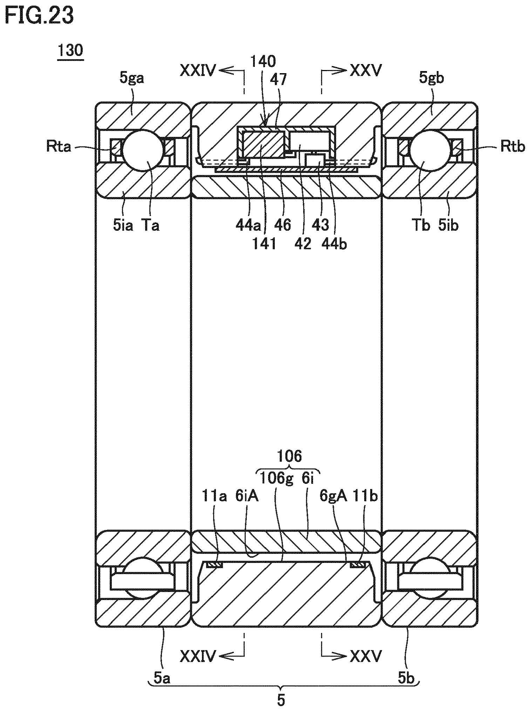

Lubricating oil supply paths 67a and 67b for cooling and lubrication of bearings 5a and 5b as will be described later are provided. Lubricating oil is injected in a state of air-oil or oil mist together with air that carries lubricating oil from emission holes (nozzles). Fig. 1 does not show the lubricating oil supply paths for the sake of brevity. When a grease lubricated bearing is employed as bearings 5a and 5b as shown in Fig. 23 later, lubricating oil supply paths do not have to be provided.

Motor 50 that drives main spindle 4 is arranged at a position intermediate in the axial direction between multiple-row bearings 5a and 5b and single-row bearing 16 in a space 22 provided between main spindle 4 and bearing jacket 2. A rotor 14 of motor 50 is fixed to a cylindrical member 15 fitted to an outer circumference of main spindle 4 and a stator 13 of motor 50 is fixed to an inner circumferential portion of bearing jacket 2.

Fig. 1 does not show a cooling medium flow channel for cooling motor 50.

Heat flux sensors 11a and 11b that measure heat fluxes are mounted on spindle apparatus 1. In the example shown in Figs. 1 and 2, heat flux sensors 11a and 11b have one surfaces fixed to inside surface 6gA of outer-ring spacer 6g and the other surfaces opposed to outside surface 6iA of inner-ring spacer 6i. Heat flux sensor 11a is arranged in the vicinity of bearing 5a and heat flux sensor 11b is arranged in the vicinity of bearing 5b.

The heat flux sensor is a sensor that converts a heat flux into an electrical signal based on a Seebeck effect, and an output voltage is generated from a slight temperature difference between a front side and a rear side of the sensor. This heat flux sensor is more sensitive than a temperature sensor such as a contactless temperature sensor or a thermocouple, and timely follows variation in heat in the inside of the bearing with variation in rotation speed. The rotation speed is synonymous with the number of rotations per unit time.

In an attempt to measure a temperature of inner rings 5ia and Sib, outer rings 5ga and 5gb, and spacer 6 for detecting a sign of seizure of bearings 5a and 5b, in spite of abrupt heat generation, the sign may not be detected in an early stage because of delay in increase in temperature. By using heat flux sensors 11a and 11b in such a case, abrupt heat generation can quickly be detected because the heat flux starts to vary earlier than the temperature.

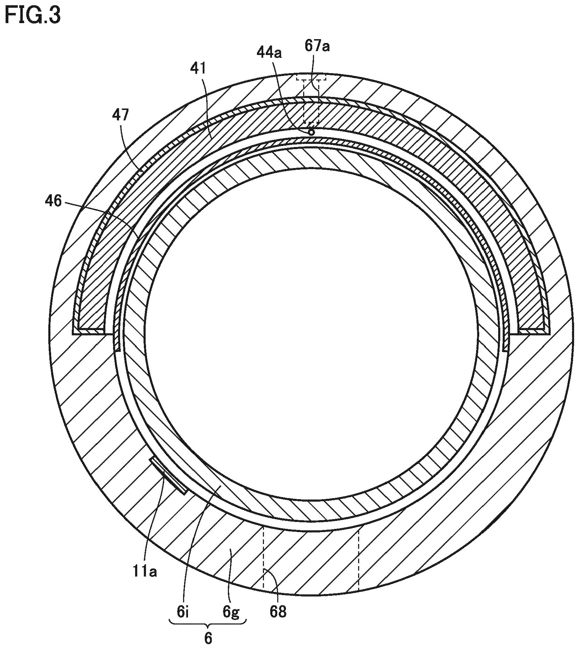

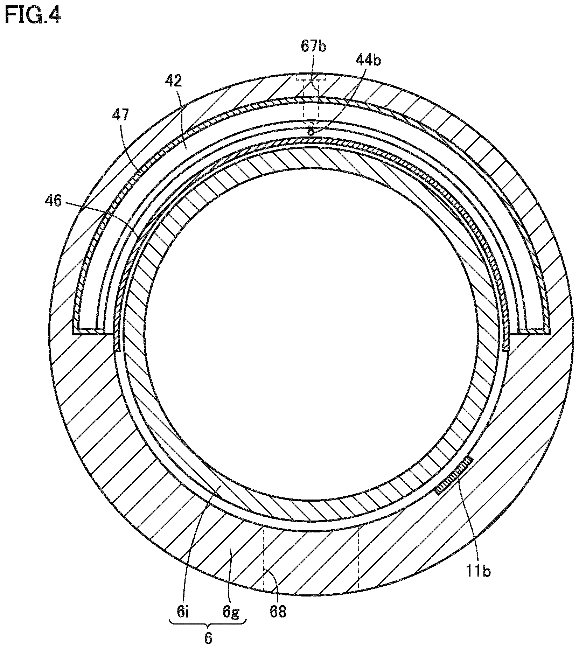

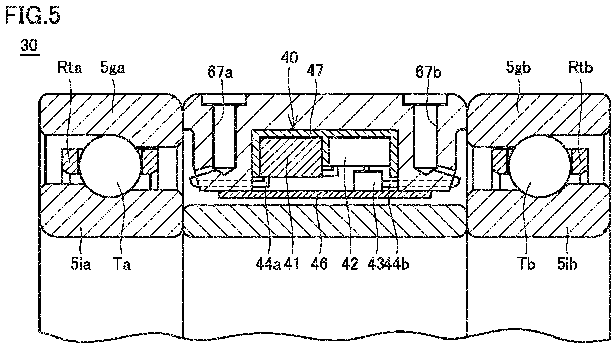

Bearing apparatus 30 in Fig. 2 will be described in further detail. Fig. 3 is a diagram schematically showing a cross-section III of the spacer in Fig. 2. Fig. 4 is a diagram schematically showing a cross-section IV of the spacer in Fig. 2. Fig. 5 is an enlarged cross-sectional view of a lubricating oil supply unit 40.

Referring to Figs. 2 to 5, spacer 6 is arranged between bearing 5a and bearing 5b. Spacer 6 includes inner-ring spacer 6i and outer-ring spacer 6g. Inner-ring spacer 6i is similar in construction to a general spacer. Outer-ring spacer 6g is provided with lubricating oil supply paths 67a and 67b for air-oil lubrication in its upper portion and with an air discharge port 68 in its lower portion. Lubricating oil supply unit 40 is incorporated in outer-ring spacer 6g.

Lubricating oil supply unit 40 includes a case 47 arranged in an accommodation space provided in outer-ring spacer 6g, electric circuitry 41, an oil tank 42, a pump 43, nozzles 44a and 44b, and a lid 46 that covers the accommodation space.

Lubricating oil identical in type to lubricating oil used for air-oil lubrication is stored in oil tank 42.

As shown in Figs. 2, 3, and 5, electric circuitry 41 is arranged in case 47. As shown in Figs. 2, 4, and 5, oil tank 42 is arranged in case 47. In case 47, electric circuitry 41 and oil tank 42 are arranged in the accommodation space provided on an inner circumferential side of outer-ring spacer 6g.

A suction tube connected to oil tank 42 and nozzle 44b for supplying lubricating oil from pump 43 to the inside of bearing 5b are connected to pump 43. A tip end of nozzle 44b in air-oil lubrication is arranged beside an air-oil injection port. Lubricating oil emitted from the tip end of nozzle 44b as a result of injection of air-oil is supplied to the inside of the bearing. A dimension of an inner diameter of a nozzle hole in nozzle 44b is set as appropriate depending on relation between surface tension originating from viscosity of lubricating oil and an amount of emission.

Though not shown, a pump similar to pump 43 is separately provided also for nozzle 44a that supplies lubricating oil to the inside of bearing 5a. Lubricating oil may be supplied from pump 43 to both of nozzles 44a and 44b.

Regarding positions of nozzles 44a and 44b in Fig. 2, a distance from the center of a rotation axis and positional relation in a direction along the rotation axis are schematically shown. As shown in Figs. 3 and 4, outlets of nozzles 44a and 44b are arranged beside the air-oil injection ports.

As shown in Fig. 3, heat flux sensor 11a is provided in the inner circumferential surface of outer-ring spacer 6g. Though not shown, a line for sending a detection signal from heat flux sensor 11a to electric circuitry 41 is provided. As shown in Fig. 4, heat flux sensor 11b is provided in the inner circumferential surface of outer-ring spacer 6g. Though not shown, a line for sending a detection signal from heat flux sensor 11b to electric circuitry 41 is provided. Regarding positions of heat flux sensors 11a and 11b in Fig. 2, a distance from the center of the rotation axis and positional relation in the direction along the rotation axis are schematically shown. Heat flux sensors 11a and 11b are arranged around air discharge port 68. According to experiments conducted by the inventor, it was confirmed that heat flux sensors 11a and 11b arranged around air discharge port 68 responded with higher sensitivity than those in other arrangement. Therefore, such arrangement is preferred.

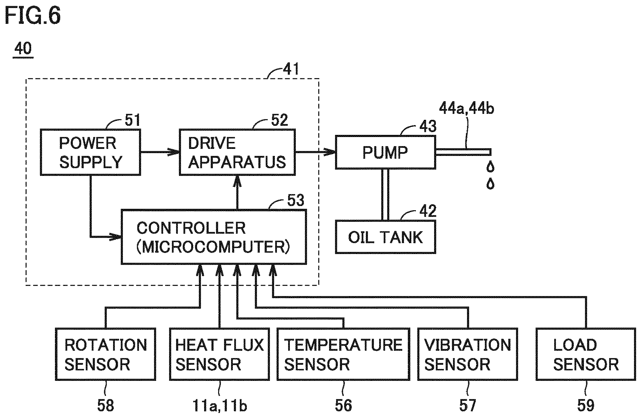

Fig. 6 is a block diagram showing a construction of lubricating oil supply unit 40 in the first embodiment. Referring to Fig. 6, lubricating oil supply unit 40 includes electric circuitry 41, oil tank 42, pump 43, and nozzles 44a and 44b. Electric circuitry 41 includes a power supply 51, a controller 53, and a drive apparatus 52 that drives the pump.

Lubricating oil supply unit 40 supplies lubricating oil to bearing 5 in accordance with outputs from heat flux sensors 11a and 11b. Lubricating oil supply unit 40 further receives outputs from a temperature sensor 56, a vibration sensor 57, a rotation sensor 58, and a load sensor 59. Load sensor 59 is provided, for example, in a gap between the bearing and the spacer so as to sense preload applied to bearing 5 and external load. Controller 53 may be configured to supply lubricating oil to bearing 5 at timing in consideration of at least one of outputs from these sensors, in addition to or instead of outputs from heat flux sensors 11a and 11b. For example, in a machine instrument tool, preload applied to bearing 5 also varies due to variation in force externally applied by a workpiece or heat generation due to high-speed operation or centrifugal force. With increase in preload, a quantity of heat generation increases due to friction force caused by oil film rupture. Therefore, it is also effective to supply lubricating oil to the bearing when load sensor 59 detects increase in preload. It is also effective to supply lubricating oil to the bearing when external load is directly sensed.

Power supply 51 is connected to controller 53 (microcomputer). Drive apparatus 52 receives supply of electric power from power supply 51 and drives pump 43 under the control by controller 53. Drive apparatus 52 is a circuit for operating pump 43 such as a micropump.

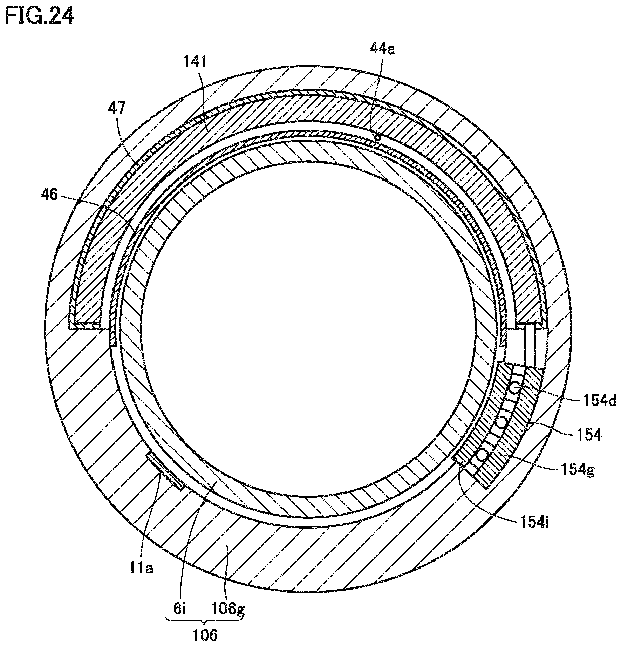

Electric power may be supplied to power supply 51 from the outside of the housing through a not-shown line or by a power generator 154 as shown in Figs. 24 to 26 later.

Pump 43 is controlled by controller 53 with drive apparatus 52 being interposed. Pump 43 suctions lubricating oil in oil tank 42 and supplies suctioned lubricating oil to the inside of bearing 5 through nozzles 44a and 44b.

<Performance Evaluation Test>

The bearing apparatus according to the embodiment was incorporated in a tester simulating a main spindle of a machine tool and performance in detection of a state of the bearing apparatus was evaluated.

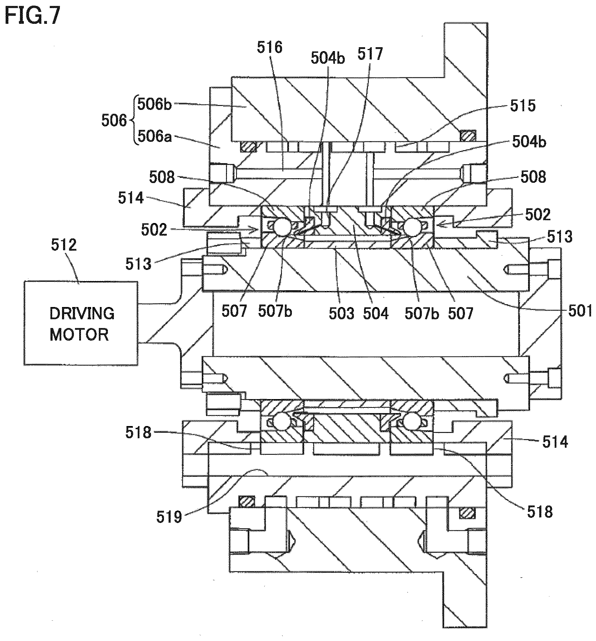

Fig. 7 is a diagram showing a structure of the tester. As shown in Fig. 7, the tester has a main spindle 501 rotatably supported by a housing 506 with the bearing apparatus described previously being interposed. A driving motor 512 is coupled to one axial end of main spindle 501 to rotationally drive main spindle 501 around a shaft center thereof. An inner ring 507 and an outer ring 508 are fixed to main spindle 501 and housing 506 by an inner-ring press-fitting jig 513 and an outer-ring press-fitting jig 514, respectively.

Housing 506 has a double layered structure of an inner housing 506a and an outer housing 506b, and a cooling medium flow channel 515 is provided between inner and outer housings 506a and 506b. Inner housing 506a is provided with an air-oil supply path 516. Air-oil supply path 516 communicates with an air-oil supply port 517 in an outer-ring spacer 504. Air-oil supplied to air-oil supply port 517 is emitted from an emission hole of a protrusion 504b that also serves as the nozzle and injected to an inclined surface 507b of inner ring 507 to lubricate a rolling bearing 502. In inner housing 506a, an air-oil exhaust groove 518 is provided in the vicinity of a portion where each rolling bearing 502 is provided, and an air-oil exhaust path 519 that opens to the atmosphere from air-oil exhaust groove 518 is provided.

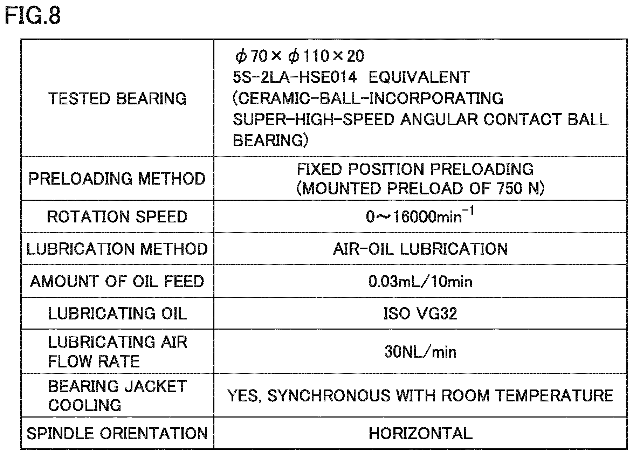

Fig. 8 is a diagram showing a test condition in the performance evaluation test. Referring to Fig. 8, a ceramic-ball-incorporating super-high-speed angular contact ball bearing (an HSE type manufactured by NTN Corporation) was employed as a tested bearing. The bearing had a size of $\phi$ 70 $\times$ $\phi$ 110 $\times$ 20 (5S-2LA-HSE 014 equivalent). Fixed-position preloading (mounted preload of 750 N) was employed as a preloading method. The rotation speed was varied within a range from 0 to 16000 rotations per minute. Air-oil lubrication was employed as a lubrication method, an amount of oil feed was set to 0.03 mL/10 mins., ISO VG32 was employed as lubricating oil, and a flow rate of lubricating air was set to 30 NL/min. The bearing jacket was cooled as being synchronous with room temperature, and an orientation of the shaft was horizontal.

<Test Result>

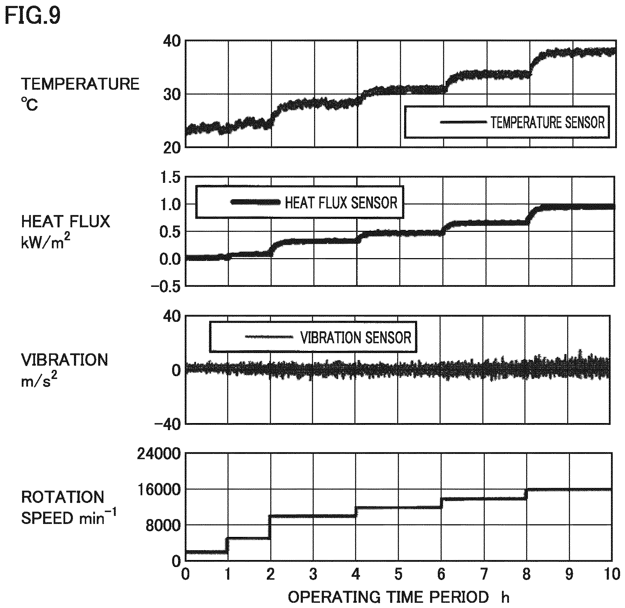

Fig. 9 is a diagram showing various sensor outputs in the bearing apparatus in the performance evaluation test. Each sensor was confirmed to normally operate from a low-speed region to a super-high-speed region (a dn value of 1.12 million).

In determination by controller 53 in Fig. 6 as to timing of lubrication of the rolling bearing, it is desirable to check whether or not each sensor normally operates. The present applicant confirmed in the test that, when the rotation speed of the bearing apparatus was increased stepwise from the low-speed region to the super-high-speed region while each sensor was normally operating, the temperature, the rotation speed, and the heat flux made transition stepwise under prescribed relation. Controller 53 automatically determines based on the performance evaluation test, each sensor as being normally operating, for example, at the time of initial diagnosis before start of operation, so that a result of determination as to timing of lubrication of the rolling bearing can more objectively be used.

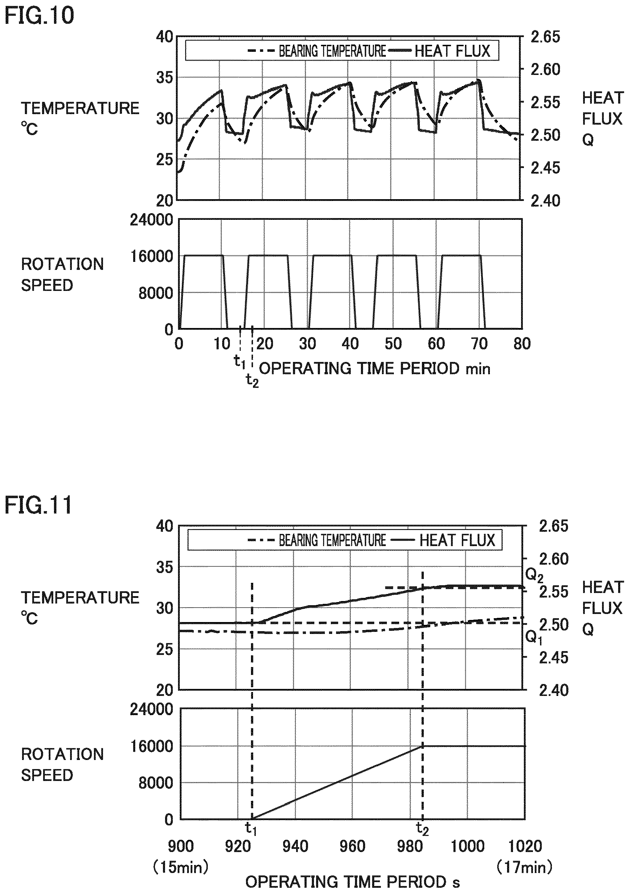

Fig. 10 is a diagram showing relation among a heat flux, a temperature, and a rotation speed in an acceleration and slowdown test. Fig. 11 is an enlarged view of the abscissa in a section from t1 to t2 in Fig. 10.

As shown in Fig. 10, a sensor output from the heat flux sensor is higher in responsiveness to increase and decrease in rotation speed than a sensor output from the temperature sensor, and accuracy in sensing of a sign of abnormality of the rolling bearing may be improved. Timing of start of increase and decrease in sensor output from the heat flux sensor is substantially synchronous with timing of start of increase and decrease in rotation speed.

<Study About Amount and Timing of Lubrication of Bearing>

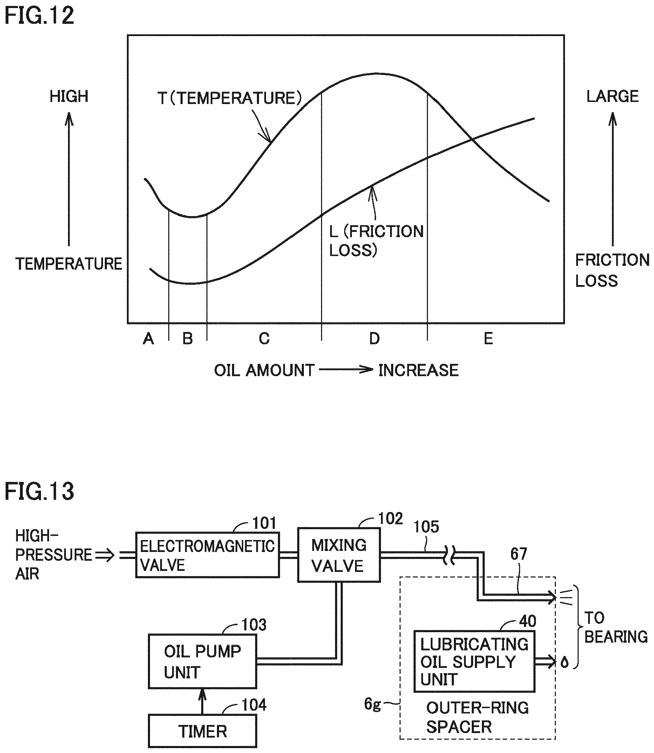

Fig. 12 is a diagram showing relation of an amount of oil supplied to a bearing with a temperature and friction loss. The ordinate in Fig. 12 represents a temperature and friction loss, and the abscissa represents an amount of lubricating oil. In a region A, friction loss L between the rolling element and a bearing ring decreases with increase in amount of lubricating oil, and hence a temperature T lowers. In contrast, in a region C, with increase in amount of lubricating oil, agitation resistance of lubricating oil increases and friction loss L increases, and temperature T increases. In a region E where the amount of lubricating oil is large, the amount of lubricating oil is large, and lubricating oil itself removes heat generated in a work machine to cool the work machine. Thereafter, lubricating oil is drained to the outside. Therefore, as the amount of lubricating oil is larger, temperature T is lower. Too much lubricating oil, however, leads to increase in agitation resistance and large friction loss L.

In high-speed rotation exceeding 10000 rotations per minute as in a machine tool, in regions C to E where friction loss is large, a huge motive power source is required, and use of the machine tool in regions C to E is not realistic. Therefore, for a bearing that rotates at a high speed and is used in a rotation shaft or the like of a machine tool, an amount of lubricating oil in a region B between region A and region C, where the temperature attains to relative minimum, is optimal.

The amount of lubricating oil at which the temperature attains to the relative minimum is normally constant. In a situation specific to a machine tool such as high-speed rotation, high rigidity (load imposed on the bearing being high), or adaptation to an environment (the amount of oil being small), supply in a constant amount may be unable to address the situation. In that case, an amount of lubricating oil in the bearing varies from hour to hour, and hence lubrication based on monitoring of a temperature of the bearing results in run-out of oil by the time of temperature increase, and the raceway surface of the inner ring and the outer ring of the bearing is damaged. In the bearing apparatus in the present embodiment, the heat flux sensor senses heat generation due to increase in friction resistance caused by decrease in amount of lubricating oil at the raceway surface in an early stage, and the amount of lubricating oil is optimally adjusted by adding lubricating oil without delay before occurrence of damage to the raceway surface.

Lubricating oil is added at timing of start of increase in heat flux due to insufficiency of lubricating oil. By repeating this procedure, lifetime of the bearing can reliably be longer, without insufficiency of the amount of lubricating oil in the bearing.

Fig. 13 is a diagram showing relation between an oil pump unit for air-oil lubrication and the lubricating oil supply unit in the spacer. Referring to Fig. 13, in an air-oil lubrication system, high-pressure air supplied via an electromagnetic valve 101 and lubricating oil supplied from an oil pump unit 103 are mixed in a mixing valve 102, and the mixture is sent to a passage 67 in the spacer through a passage 105. Oil pump unit 103 delivers lubricating oil to mixing valve 102 at constant intervals at timing set by a timer 104.

While lubricating oil passes through an air passage 105, lubricating oil is cut into fine particles and supplied to the bearing. An amount of necessary lubricating oil, however, increases or decreases depending on a type of works and a position of working.

In air-oil lubrication, a range of an appropriate amount of oil is relatively narrow for a bearing that supports a shaft that rotates at a high speed and it is difficult to add an appropriate amount of oil. For example, an amount of addition in mixing valve 102 may be regulated while a state of the bearing is monitored. Mixing valve 102, however, is often arranged at a location in air passage 105 relatively distant from the bearing, and there is a time lag from dripping of oil from an oil valve until spread of oil over the bearing. Therefore, addition of oil after occurrence of change in state in the bearing is too late for lubrication.

Then, in the first embodiment, when a heat flux detected by the heat flux sensor starts to increase as a result of insufficiency of lubricating oil by air-oil lubrication alone, lubricating oil supply unit 40 additionally supplies lubricating oil to the bearing. Since an appropriate amount of lubricating oil is thus constantly present in the bearing, a machine tool or the like can operate in a state less in friction loss while lifetime of the bearing is maintained.

In an attempt to sense a sign in the event of occurrence of abnormality in the rolling bearing, a bearing abnormality simulation test was conducted.

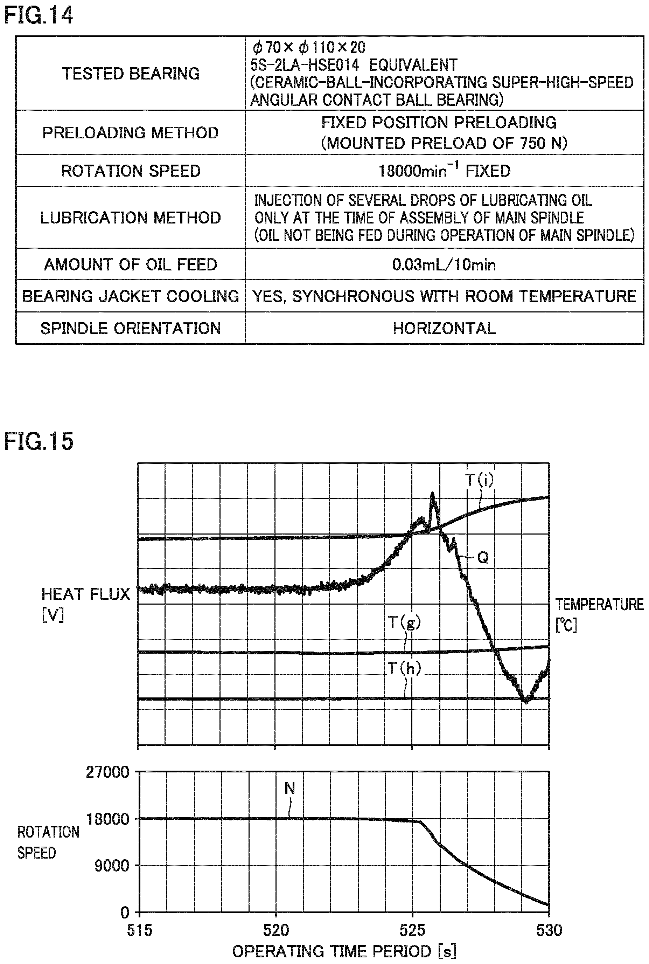

Fig. 14 is a diagram showing a condition in a test in which abnormality in a bearing due to run-out of lubricating oil is simulated. Referring to Fig. 14, a ceramic-ball-incorporating super-high-speed angular contact ball bearing (an HSE type manufactured by NTN Corporation) was employed as a tested bearing. The bearing had a size of $\phi 70 \times \phi 110 \times 20$ (5S-2LA-HSE 014 equivalent). Fixed position preloading (mounted preload of 750 N) was employed as a preloading method. The rotation speed was set to a constant speed of 18000 rotations per minute. The bearing jacket was cooled as being synchronous with room temperature, and an orientation of the shaft was horizontal.

In this simulation test as well, the tester in Fig. 7 was used as in the performance evaluation test and the acceleration and slowdown test. In the present simulation test, by introducing a very small amount of lubricating oil into the rolling bearing only at the time of assembly of the main spindle, a situation where abnormality due to run-out of lubricating oil was likely to occur in a tested bearing was created. Such setting that a limiter was activated and the tester automatically stopped when a driving motor 512 (Fig. 7) was overloaded due to abnormality in the tested bearing was made.

<Result in Simulation Test>

Fig. 15 is a diagram showing relation among a heat flux, a temperature, and a rotation speed in the test in which bearing abnormality due to run-out of lubricating oil was simulated. The abscissa represents an operating time period (seconds). The upper field shows a heat flux Q, an inner ring temperature T(i), an outer ring temperature T(g), and a housing temperature T(h), and the lower field shows a rotation speed N (the number of rotations per minute).

Based on relation between a heat capacity and heat radiation, relation of inner ring temperature T(i) > outer ring temperature T(g) > housing temperature T(h) is held.

Rotation speed N starts to lower after time 525 (seconds) as overloading of driving motor 512 (Fig. 7) was detected. Before time 525 (seconds), each temperature hardly changed, and it can be seen that it is difficult to detect a sign of abnormality based on the temperature. It is expected based on a result of the test that increase in output value of heat flux Q is observed earlier than increase in inner ring temperature T(i) and the like and that heat flux Q is effective in early detection of the sign of occurrence of abnormality in the rolling bearing.

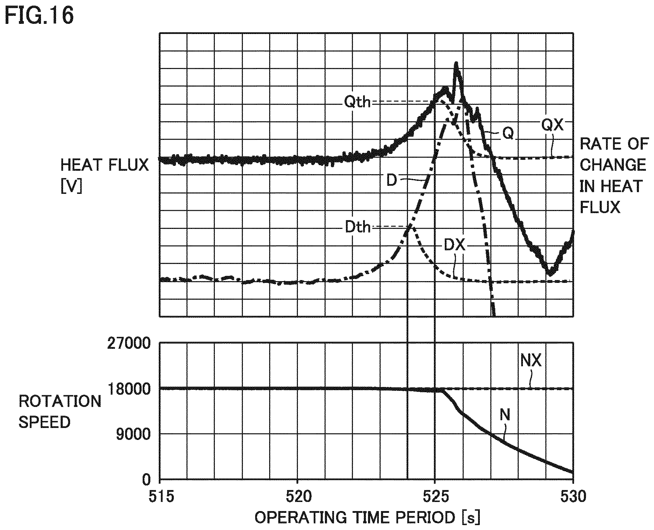

Fig. 16 is a waveform diagram for illustrating an operation by the bearing apparatus in the first embodiment. Fig. 16 shows a waveform at the time of supply of lubricating oil by lubricating oil supply unit 40 in the present embodiment, as being superimposed on the waveform in a simulation experiment shown in Fig. 15.

The abscissa in Fig. 16 represents an operating time period (seconds). The upper field shows heat flux Q and a rate of change D in heat flux, and a heat flux Qx and a rate of change Dx at the time of supply of lubricating oil are shown as being superimposed thereon. The lower field shows rotation speed N (the number of rotations per minute).

Unless supply of lubricating oil is resumed, after time 525 (seconds), overload of the motor due to damage to the bearing is sensed and rotation speed N starts to lower.

In order to avoid damage to the bearing, lubricating oil should be added before time 525 (seconds). Since the temperature increases after time 525 (seconds) as shown in Fig. 15, addition of lubricating oil based on increase in temperature is too late. In contrast, heat flux Q detected by the heat flux sensor increases from about time 523 (seconds). Therefore, lubricating oil is preferably added in response to sensing of increase in output from the heat flux sensor. A threshold value Qth on which determination as increase is based should be set with a margin in consideration of noise in a steady state. With individual variation of a machine in which the bearing is set or operating conditions set by a user being various, however, it is very difficult to set threshold value Qth for slight increase.

In contrast, it was found in experiments conducted by the inventors that a sign of damage to the bearing could be found early by calculating rate of change D (an amount of change per unit time) in heat flux Q. It was also found about rate of change D in output that a relatively uniformly determined threshold value could practically be used even though individual variation in machine in which the bearing is set or the operating condition set by the user was different. Therefore, more preferably, lubricating oil is added when rate of change D in output from the heat flux sensor exceeds a threshold value Dth.

Rate of change D is a parameter calculated by time derivative of heat flux Q detected by the heat flux sensor. By using the parameter obtained by time derivative of heat flux Q, instantaneous and abrupt heat generation can accurately be detected.

By drip of lubricating oil by lubricating oil supply unit 40 at the time point (around 525 seconds) when heat flux Q exceeds threshold value Qth or at the time point (around 524 seconds) when rate of change D in heat flux exceeds threshold value Dth, the bearing is not damaged. Consequently, in the waveform in Fig. 16, a steady operation can continue as shown with a rotation speed Nx also after time 525 (seconds), without restriction being imposed on the motor.

Since judgment criterion value Dth for rate of change D is different for each main spindle of the machine tool or output from the heat flux sensor, Dth is set to various values such as Dth = 0.1 and Dth = 10. Judgment criterion value Dth may be determined in an evaluation test in which actual bearing seizure is simulated.

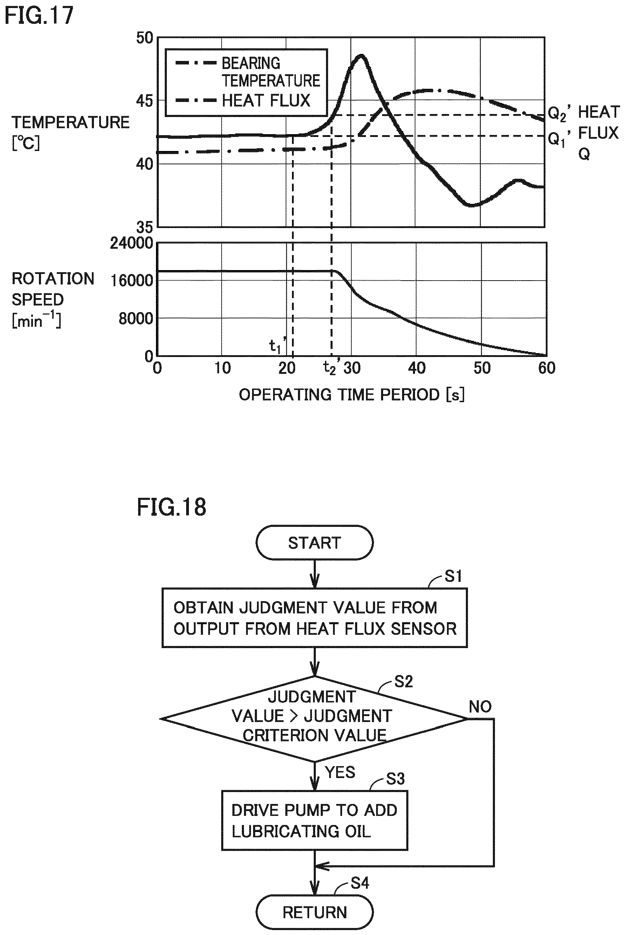

Fig. 17 is a waveform diagram for illustrating a state in an evaluation test in which actual bearing seizure is simulated. In a result of the evaluation test shown in Fig. 17, the heat flux increased and the rotation speed started to lower for protection of the motor during a period from time 20 seconds to time 30 seconds of the operating time period. In an example where such a result is obtained, judgment criterion value Dth may be determined as in an expression below.

$$Dth = (Q_2' - Q_1')/(t_2' - t_1')$$

Fig. 18 is a flowchart for illustrating control of supply of lubricating oil by the controller. Processing in this flowchart is performed as being invoked from a main routine every certain time period (for example, every 2 to 3 ms.). Referring to Figs. 6 and 18, controller 53 obtains a judgment value from heat flux sensors 11a and 11b in step S1. Though heat flux Q may be adopted as the judgment value, rate of change D in heat flux is preferred. When heat flux Q is adopted, for example, the judgment value can be obtained by checking a detection value from heat flux sensors 11a and 11b against a predetermined map stored in a memory in the controller. When rate of change D in heat flux is adopted, for example, the judgment value can be obtained by dividing a difference between previous heat flux Q and present heat flux Q by a time interval.

In succession in step S2, controller 53 determines whether or not the judgment value is larger than a judgment criterion value. In an example where heat flux Q is adopted as the judgment value, threshold value Qth shown in Fig. 16 is adopted as the judgment criterion value. In an example where rate of change D in heat flux is adopted as the judgment value, threshold value Dth shown in Fig. 16 is adopted as the judgment criterion value.

The judgment criterion value can be determined, for example, in the test described with reference to Figs. 7 to 11. For example, heat flux Q increases with increase in rotation speed N in Fig. 9. Therefore, judgment criterion value Qth may be set to a value calculated by multiplying heat flux Q corresponding to maximum rotation speed N under an operating condition of the spindle apparatus by a safety factor.

Rotation speed N and heat flux Q are associated with each other, for example, based on any one or both of the test and the simulation as shown in Fig. 9. Judgment criterion value Qth may be determined in advance for each rotation speed N based on this relation. Therefore, judgment criterion value Qth may be determined in advance for each rotation speed N, rotation speed N may be read from rotation sensor 58, and judgment criterion value Qth corresponding to read rotation speed N may be applied.

For example, judgment criterion value Dth may be determined in accordance with an expression below, based on variation in heat flux from $Q_1$ to $Q_2$ during a period between time $t_1$ and time $t_2$ in Fig. 11:

$$Dth = M \times (Q_2 - Q_1)/(t_2 - t_1)$$

where M represents a safety factor. Since safety factor M in the expression is different for each main spindle of the machine tool, M is set to various values such as M = 1 and M= 100.

Since it has been known that a value of rate of change D in heat flux at the time of occurrence of abnormality of the bearing is significantly larger than a value thereof at the time of increase in rotation speed N, uniform threshold value Dth can be used for rate of change D, regardless of variation in rotation speed N.

When a condition of the judgment value > the judgment criterion value is satisfied (YES in S2), in step S3, controller 53 drives pump 43 for a certain time period to supply lubricating oil to bearing 5, and control returns to a main routine in step S4. When the condition of the judgment value > the judgment criterion value is not satisfied (NO in S2), control returns to the main routine in step S4 with processing in step S3 being skipped.

The temperature or vibration may gradually increase due to progress of surface roughening of the raceway surface, although the rate of change does not much vary. In such a case, use may be continued by increasing the amount of lubricating oil. Therefore, processing in step S2 may be modified to perform processing in step S3 not only when rate of change D in output from the heat flux sensor exceeds the threshold value but also when the temperature or vibration exceeds the threshold value.

Depending on a measurement environment, noise like a spike may be produced in output from the heat flux sensor under the influence by electrical noise from the motor driven in or around a facility or vibration noise in the facility. When noise like a spike is introduced, it may be difficult to accurately make determination as to abnormality (seizure or large heat generation) in the bearing based on rate of change D in heat flux. In order to address such noise, it is effective to set an upper limit value for a signal from the heat flux sensor, in addition to determination described above.

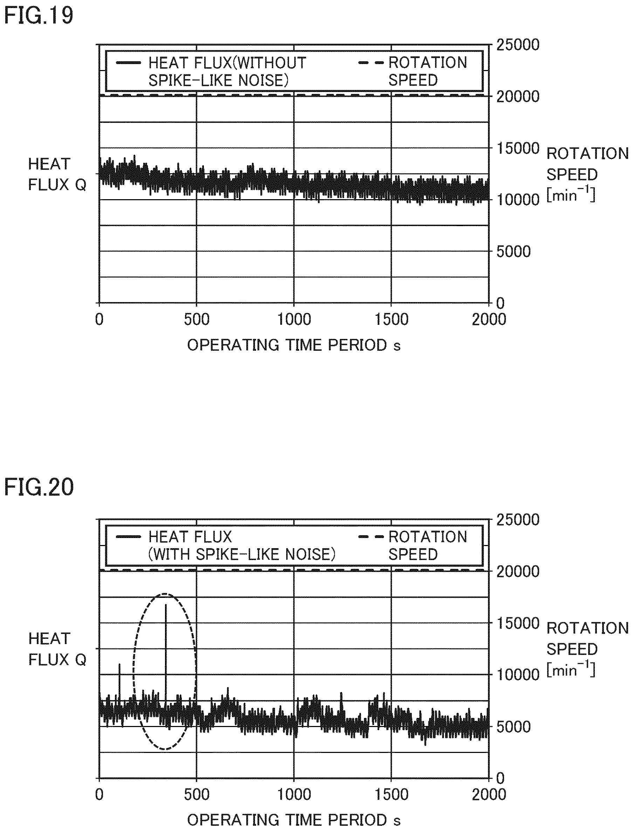

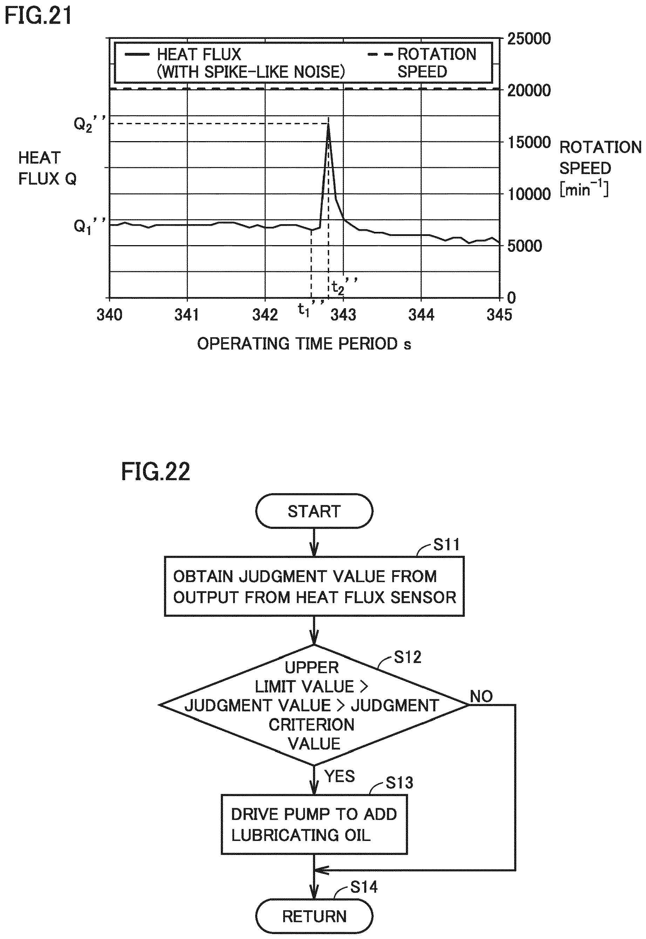

Fig. 19 is a waveform diagram of an output signal from the heat flux sensor when spike-like noise is not being produced. Fig. 20 is a waveform diagram of an output signal from the heat flux sensor when spike-like noise is being produced. Fig. 21 is a diagram showing a section around spike noise in Fig. 20 as being enlarged.

When spike-like noise is observed, spike-like noise that has actually been produced may be measured, an upper limit value Dth' may be set based on a noise observation value, and determination as to abnormality of the bearing (seizure or large heat generation) may be made within a range of an expression below.

$$Dth' = (Q_2'' - Q_1'')/(t_2'' - t_1'')$$

Fig. 22 is a flowchart for illustrating control in which an upper limit value is applied. Processing in this flowchart is performed as being invoked from the main routine every certain time period (for example, every 2 to 3 ms.). Referring to Figs. 6 and 22, controller 53 obtains the judgment value from heat flux sensors 11a and 11b in step S11. Rate of change D in heat flux is adopted as the judgment value in this case. Rate of change D in heat flux can be obtained, for example, by dividing a difference between previous heat flux Q and present heat flux Q by a time interval.

In succession, in step 512, controller 53 determines whether or not the judgment value is larger than judgment criterion value Dth shown in Fig. 16 and smaller than upper limit value Dth' determined as shown in Fig. 21.

For example, judgment criterion value Dth may be determined in accordance with an expression below, based on variation in heat flux from $Q_1$ to $Q_2$ during a period between time $t_1$ and time $t_2$ in Fig. 11:

$$Dth = M \times (Q_2 - Q_1)/(t_2 - t_1)$$

where M represents a safety factor. Since safety factor M in the expression is different for each main spindle of the machine tool, M is set to various values such as M = 1 and M = 100.

When a condition of the upper limit value > the judgment value > the judgment criterion value is satisfied (YES in S12), in step S13, controller 53 drives pump 43 for a certain time period to supply lubricating oil to bearing 5, and control returns to the main routine in step S 14. When the condition of the upper limit value > the judgment value > the judgment criterion value is not satisfied (NO in S12), controller 53 skips processing in step S13, and control returns to the main routine in step S14.

As described above, lubricating oil supply unit 40 and bearing apparatus 30 in the first embodiment include oil tank 42 which is the "holding portion" in which lubricating oil is held, pump 43 which is the "supply portion" that supplies lubricating oil held in oil tank 42 to bearing 5, heat flux sensors 11a and 11b provided in bearing 5 or spacer 6 which is the member adjacent to the bearing, and controller 53 that controls operation of pump 43 in accordance with outputs from heat flux sensors 11a and 11b. Heat flux sensors 11a and 11b accurately detect instantaneous and abrupt heat generation of rolling bearing 5, and a sign of abnormality of the rolling bearing can be determined based on a result of detection and the bearing can be lubricated at appropriate timing.

Preferably, controller 53 drives pump 43 which is the supply portion to supply lubricating oil to rolling bearing 5 when rate of change D in heat flux detected by heat flux sensors 11a and 11b exceeds judgment criterion value Dth and does not exceed upper limit value Dth'. Controller 53 does not drive pump 43 which is the supply portion when rate of change D in heat flux detected by heat flux sensors 11a and 11b does not exceed judgment criterion value Dth or exceeds upper limit value Dth'.

Preferably, determination may be based on heat flux Q instead of rate of change D. In this case, upper limit value Qth' should only be determined. Controller 53 drives pump 43 to supply lubricating oil to bearing 5 when heat flux Q detected by heat flux sensors 11a and 11b exceeds judgment criterion value Qth and does not exceed upper limit value Qth'. Controller 53 does not drive pump 43 when heat flux Q detected by heat flux sensors 11a and 11b does not exceed judgment criterion value Qth or exceeds upper limit value Qth'.

By thus providing upper limit value Dth' or upper limit value Qth', misoperation of pump 43 can be reduced.

[Second Embodiment]

An example in which lubricating oil from the lubricating oil supply unit in addition to air-oil is added to the bearing is described in the first embodiment. In a second embodiment, an example in which, for a grease-lubricated bearing, lubricating oil from the lubricating oil supply unit is added to the bearing is described. Since the construction of the spindle apparatus in which the bearing apparatus in Fig. 1 is incorporated is common also in the second embodiment, description thereof will not be repeated.

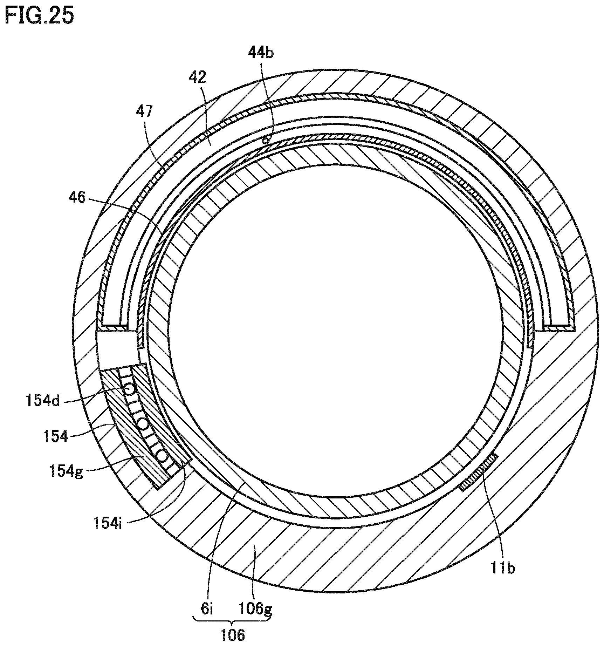

Fig. 23 is a schematic cross-sectional view showing a construction of a bearing apparatus in the second embodiment. Fig. 24 is a diagram schematically showing a cross-section XXIV of the spacer in Fig. 23. Fig. 25 is a diagram schematically showing a cross-section XXV of the spacer in Fig. 23.

Referring to Figs. 23 to 25, in the second embodiment, a spacer 106 is arranged between bearing 5a and bearing 5b. The structure of bearing 5a and bearing 5b is the same as in the first embodiment.

Spacer 106 includes an inner-ring spacer 6i and an outer-ring spacer 106g. Inner-ring spacer 6i is similar in construction to a general spacer. A lubricating oil supply unit 140 is incorporated in outer-ring spacer 106g.

Lubricating oil supply unit 140 includes case 47 arranged in the accommodation space provided in outer-ring spacer 106g, electric circuitry 141, a power generator 154, oil tank 42, pump 43, nozzles 44a and 44b, and lid 46 that covers the accommodation space.

Lubricating oil identical in type to base oil for grease sealed in bearing 5 is stored in oil tank 42.

As shown in Fig. 24, electric circuitry 141 is arranged in case 47. As shown in Fig. 25, oil tank 42 is arranged in case 47. In case 47, electric circuitry 141 and oil tank 42 are arranged in the accommodation space provided on the inner circumferential side of outer-ring spacer 106g.

A suction tube connected to oil tank 42 and nozzle 44b for supplying lubricating oil from pump 43 to the inside of bearing 5b are connected to pump 43. The tip end of nozzle 44b extends to the inside of bearing 5b (a position adjacent to rolling element Tb such as a position between a bearing ring on a fixed side of bearing 5b and a bearing ring on a rotation side thereof). The dimension of the inner diameter of the nozzle hole in nozzle 44b is set as appropriate depending on relation between surface tension originating from viscosity of base oil and an amount of emission.

Though not shown, a pump similar to pump 43 is separately provided also for nozzle 44a that supplies lubricating oil to the inside of bearing 5a. Lubricating oil may be supplied from pump 43 to both of nozzles 44a and 44b.

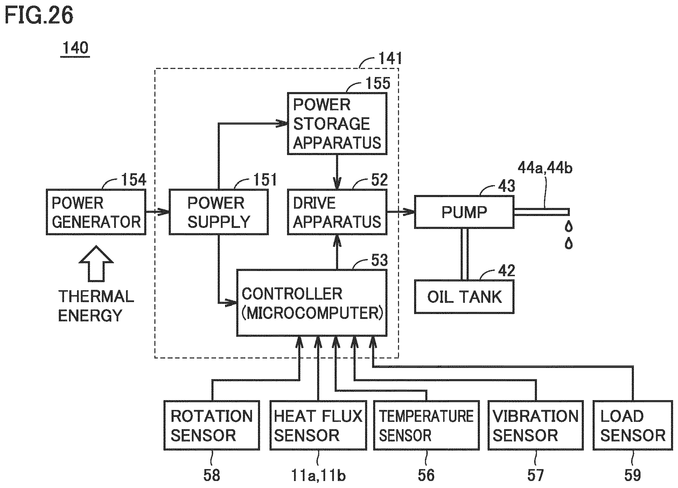

Fig. 26 is a block diagram showing a construction of lubricating oil supply unit 140 in the second embodiment. Referring to Fig. 26, lubricating oil supply unit 140 includes electric circuitry 141, oil tank 42, pump 43, and nozzles 44a and 44b. Electric circuitry 141 includes a power supply 151, controller 53, drive apparatus 52 that drives the pump, and a power storage apparatus 155.

Lubricating oil supply unit 140 supplies lubricating oil to bearing 5 in accordance with outputs from heat flux sensors 11a and 11b. Lubricating oil supply unit 140 may be configured to further receive outputs from temperature sensor 56, vibration sensor 57, and rotation sensor 58 and to supply lubricating oil to bearing 5 at timing in consideration also of these outputs.

As compared with Fig. 6, in the construction shown in Fig. 26, power generator 154 and power storage apparatus 155 are added. Power generator 154 and power storage apparatus 155 are included in electric circuitry 141 arranged in an accommodation portion of the outer-ring spacer. Power generator 154 is connected to power supply 151 and power supply 151 is connected to controller 53 (microcomputer) and power storage apparatus 155. Drive apparatus 52 receives supply of electric power from power storage apparatus 155 and drives pump 43 under the control by controller 53. Drive apparatus 52 is a circuit for operating pump 43 such as a micropump.

For example, a thermoelectric element (Peltier element) that generates electric power owing to the Seebeck effect can be employed as power generator 154 of lubricating oil supply unit 140. Specifically, as shown in Figs. 24 and 25, power generator 154 includes a heat sink 154g connected to outer-ring spacer 106g, a heat sink 154i arranged as being opposed to inner-ring spacer 6i, and a thermoelectric element 154d arranged between the two heat sinks.

When a rolling bearing is employed as bearing 5 as shown in Figs. 23 to 25, a temperature of inner rings 5ia and Sib and outer rings 5ga and 5gb increases due to friction heat against rolling elements Ta and Tb. Since outer rings 5ga and 5gb are normally incorporated in the housing of an instrument, heat is radiated by heat conduction. Therefore, a temperature difference is created between inner rings 5ia and Sib and outer rings 5ga and 5gb (inner rings 5ia and Sib being higher in temperature than outer rings 5ga and 5gb). The temperature conducts to heat sinks 154g and 154i. A temperature difference is created between opposing end surfaces of thermoelectric element 154d arranged between heat sinks 154g and 154i. Therefore, thermoelectric element 154d can generate electric power owing to the Seebeck effect.

An intimate contact surface of heat sink 154g on a side of the outer ring enhances a heat conduction (heat radiation) effect by being in intimate contact, by being identical in curvature of an inner diameter of the accommodation portion provided in outer-ring spacer 106g. Heat sink 154i on a side of the inner ring is not in contact with inner-ring spacer 6i. If possible, a surface area of an inner circumferential surface of heat sink 154i on the side of the inner ring is desirably large. In order to enhance thermal conductivity (and intimate contact), heat-radiation grease or the like is desirably applied between an inner circumferential surface of outer-ring spacer 106g and an outer circumferential surface of heat sink 154g, between heat sink 154g and thermoelectric element 154d, and between thermoelectric element 154d and heat sink 154i on the side of the inner ring. Heat-radiation grease is generally mainly composed of silicon. A metal high in thermal conductivity is employed for heat sinks 154g and 154i. Though examples of the metal include gold, silver, and copper, copper is generally used from a point of view of cost. A copper alloy mainly composed of copper may be employed. Sintering, forging, or casting is a working method advantageous in terms of cost.

By including such power generator 154, electric power does not have to externally be supplied to lubricating oil supply unit 140. Therefore, a power line for supplying electric power from the outside does not have to be attached to a spindle of a work machine.

Charges generated (produced) by power generator 154 are stored in power storage apparatus 155. Power storage apparatus 155 includes a storage battery or a capacitor. An electric double layer capacitor (condenser) is preferably employed as the capacitor.

Pump 43 is controlled by controller 53 with drive apparatus 52 being interposed. Pump 43 suctions lubricating oil in oil tank 42 and supplies suctioned lubricating oil to the inside of bearing 5 through nozzles 44a and 44b.

As described with reference to Figs. 16 and 18, controller 53 controls pump 43 in accordance with outputs from heat flux sensors 11a and 11b also in the second embodiment.

Similarly to lubricating oil supply unit 40 and bearing apparatus 30 in the first embodiment, lubricating oil supply unit 140 and a bearing apparatus 130 shown in the second embodiment can accurately detect instantaneous and abrupt heat generation in rolling bearing 5 with heat flux sensors 11a and 11b, determine a sign of abnormality of the rolling bearing based on a result of detection, and lubricate the bearing at appropriate timing.

Since lubricating oil supply unit 140 and bearing apparatus 130 further include power generator 154, external power feed is not necessary and a line or the like can be reduced.

[Modification of Arrangement of Heat Flux Sensor]

Two bearings 5a and 5b as bearing apparatus 30 support main spindle 4 is described in the first and second embodiments. Without being limited to such a construction, the lubricating oil supply unit shown in the first or second embodiment can be applied also to a bearing apparatus in which at least two bearings support main spindle 4.

Fig. 27 is a diagram showing first exemplary arrangement of the heat flux sensor. Fig. 27 shows a structure of a bearing apparatus 30A in which four bearings support the main spindle. Bearing apparatus 30A additionally includes spacers 31c and 31d and bearings 5c and 5d on an outer side of both of bearings 5a and 5b of bearing apparatus 30 in Fig. 1. A heat flux sensor 11c is arranged in an inside surface 31gAc of an outer-ring spacer 31gc of added spacer 31c and a heat flux sensor 11d is arranged in an inside surface 31gAd of an outer-ring spacer 31gd of added spacer 31d. Since the structure is otherwise the same as in Fig. 1, description will not be provided. Though a heat flux sensor is arranged for all bearings in Fig. 27, a bearing where abnormality is more likely may be selected from among a plurality of bearings in view of design or experiences and a heat flux sensor may be arranged therein.

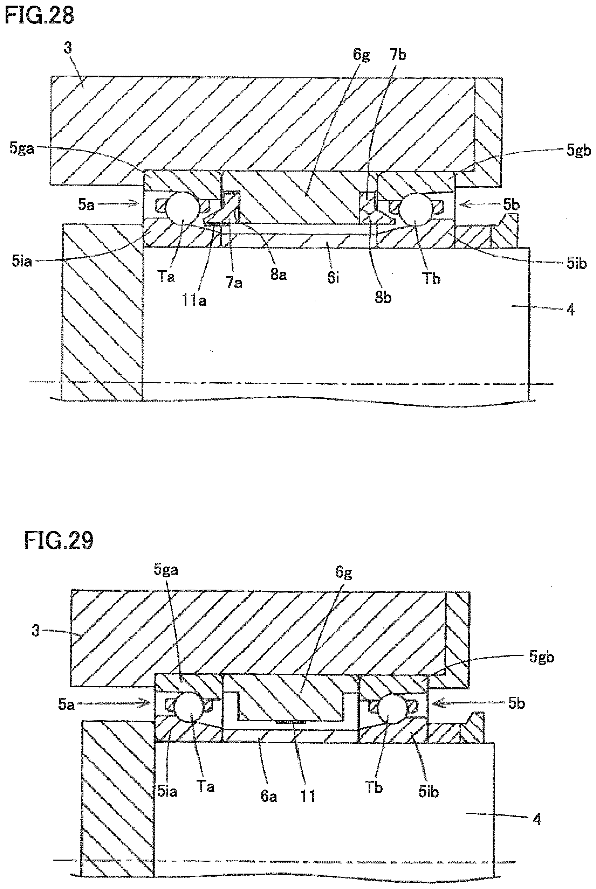

Fig. 28 is a diagram showing second exemplary arrangement of the heat flux sensor. As shown in Fig. 28, protrusions 7a and 7b that protrude from respective axial side surfaces into a gap between the inner ring and the outer ring are added in outer-ring spacer 6g on a fixed side, and heat flux sensors 11a and 11b may be provided in protrusions 7a and 7b, respectively. Heat originates from a portion where a bearing ring on the fixed side of a rolling bearing comes in contact with a rolling element. In an example where the heat flux sensor is provided in the bearing ring on the fixed side, high cost for working the bearing ring on the fixed side is a concern. This problem is solved by providing a heat flux sensor in protrusions 7a and 7b of the spacer on the fixed side, and the heat flux sensor can readily be provided. Since heat flux sensors 11a and 11b are provided in protrusions 7a and 7b that protrude into the gap between the inner ring and the outer ring, variation in temperature in the inside of the bearing during operations can directly be detected.

Protrusions 7a and 7b may also serve as nozzles that emit lubricating oil for air-oil lubrication to rolling bearings 5a and 5b. In this case, the heat flux sensor can be provided by making use of an existing nozzle that emits lubricating oil. Therefore, for example, cost can be lower than in an example in which a dedicated component for providing a heat flux sensor is provided.

Fig. 29 is a diagram showing third exemplary arrangement of the heat flux sensor. Though Figs. 1 to 4 show an example in which heat flux sensors 11a and 11b are provided in the vicinity of bearing 5 in outer-ring spacer 6g on the fixed side, heat flux sensor 11 may be provided around the center in the axial direction of the inner circumferential surface of outer-ring spacer 6g as shown in Fig. 29.

When the heat flux sensor is provided in the vicinity of bearing 5 in outer-ring spacer 6g on the fixed side as shown in Figs. 1 to 4, heat fluxes that flow between the inner ring and the outer ring of bearing 5 can separately be detected with high sensitivity. When the heat flux sensor is provided, for example, around the center in the axial direction of outer-ring spacer 6g on the fixed side as shown in Fig. 29, the single heat flux sensor can detect the heat flux that flows between the inner ring and the outer ring of bearing 5.

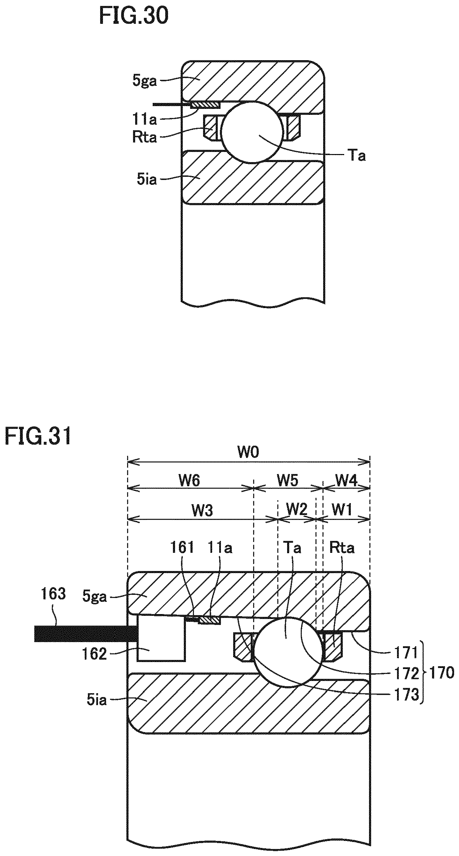

Fig. 30 is a diagram showing fourth exemplary arrangement of the heat flux sensor. As shown in Fig. 30, heat flux sensor 11a may be provided on the inner circumferential surface of outer ring 5ga. In this case, heat flux sensor 11b may similarly be provided on the inner circumferential surface of outer ring 5gb, although not shown.

Fig. 31 is a diagram showing fifth exemplary arrangement of the heat flux sensor. As shown in Fig. 31, heat flux sensor 11a may be provided on the inner circumferential surface of outer ring 5ga, and a processing circuit 162 that processes an output signal from heat flux sensor 11a may be arranged beside the same. Heat flux sensor 11a is connected to processing circuit 162 through a line 161, and a signal processed by processing circuit 162 is transmitted to another control circuit or the like through a line 163. Processing circuit 162 performs, for example, processing for amplifying a signal or processing for A/D conversion.

In this case, when the bearing is small in size, a space for arranging heat flux sensor 11a and processing circuit 162 gives rise to a problem. As shown in Fig. 31, as necessary, the inner circumferential surface of outer ring 5ga of the bearing where heat flux sensor 11a and processing circuit 162 are arranged may be extended in the axial direction, and inner ring 5ia opposed thereto may also similarly be extended in the axial direction. In this case, rolling element Ta is preferably arranged toward a side where heat flux sensor 11a is not arranged, relative to a central position in the axial direction of outer ring 5ga.

The construction in Fig. 30 or 31 may be applied to the construction in Fig. 27. In the description with reference to Fig. 27, heat flux sensors are arranged in inside surfaces 6gA, 31gAc, and 31gAd of outer-ring spacers 6g, 31gc, and 31gd that do not rotate. A structure, however, may be such that a heat flux sensor is arranged in a bearing ring (an outer ring) on a non-rotating side of bearings 5a to 5d to be opposed to a rotating ring (an inner ring).

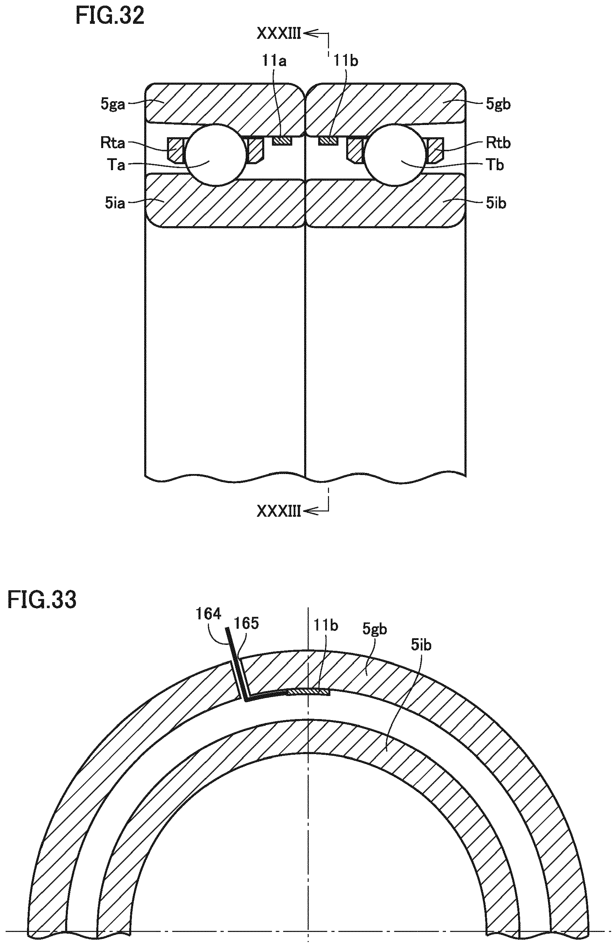

Fig. 32 is a diagram showing sixth exemplary arrangement of the heat flux sensor. Fig. 33 is a cross-sectional view in a XXXIII cross-section in Fig. 32. Exemplary arrangement shown in Figs. 32 and 33 can be employed when a signal line of the heat flux sensor cannot be drawn in the axial direction from the side surface of the bearing.

In the example shown in Fig. 32, two angular contact ball bearings are arranged in back-to-back duplex bearing arrangement. Heat flux sensor 11a is provided on the inner circumferential surface of outer ring 5ga and heat flux sensor 11b is provided on the inner circumferential surface of outer ring 5gb. Preferably, outer ring 5ga and inner ring 5ia each have the inner circumferential surface where heat flux sensor 11a is provided extended in the axial direction and outer ring 5gb and inner ring 5ib each have the inner circumferential surface where heat flux sensor 11b is provided extended in the axial direction.

Since the heat flux sensor is arranged on the inner circumferential surface on a side where the bearing is arranged as being in contact with an adjacent bearing, a line cannot be drawn from the side to the outside. Therefore, as shown in Fig. 33, a hole 165 that passes through from the inner circumferential surface to the outer circumferential surface is provided in outer ring 5gb, and a line 164 for taking a signal out of heat flux sensor 11b is drawn to the outside of the bearing through hole 165. Though not shown, a through hole for drawing a similar line is provided also in outer ring 5ga.

As described above, the bearing apparatus shown in Figs. 31 to 33 includes outer ring 5ga, inner ring 5ia, rolling element Ta, retainer Rta, and heat flux sensor 11a. An inner circumferential surface 170 of outer ring 5ga includes a raceway surface 172 with which rolling element Ta comes in contact and a first surface 171 and a second surface 173 located to sandwich raceway surface 172 from opposing sides. Heat flux sensor 11a is arranged on second surface 173 of inner circumferential surface 170 of outer ring 5ga.

An axial width W0 of the bearing is a total of a width W1 of first surface 171, a width W2 of raceway surface 172, and a width W3 of second surface 173. In order to secure a space where heat flux sensor 11a is arranged, outer ring 5ga is formed such that width W3 of second surface 173 is larger than width W1 of first surface 171.

The construction can be expressed also as below. Specifically, axial width W0 of the bearing is a total of an axial width W5 of rolling element Ta, and a width W4 of a first portion and a width W6 of a second portion other than the former. In order to secure a space for arranging heat flux sensor 11a, outer ring 5ga is formed such that width W6 of the second portion is larger than width W4 of the first portion other than rolling element Ta.

Preferably, processing circuit 162 that processes a signal from heat flux sensor 11a is arranged together with heat flux sensor 11a, on second surface 173 of inner circumferential surface 170 of outer ring 5ga.

Preferably, hole 165 that passes through from the inner circumferential surface to the outer circumferential surface is provided in outer ring 5gb for passage of a line for taking out a signal from heat flux sensor 11b. Preferably, a not-shown similar hole that passes through from the inner circumferential surface to the outer circumferential surface is provided in outer ring 5ga for passage of a line for taking out a signal from heat flux sensor 11a.

Though a construction in which the outer ring of the bearing is fixed and the inner ring rotates is described above by way of example, the present invention can be applied also to an example where the outer ring rotates and the inner ring is fixed, by attaching a heat flux sensor on a side where the ring is fixed.

Though horizontal main spindle 4 is illustrated in the description above, the bearing apparatus in the present embodiment is applicable also to a machine tool including vertical main spindle 4.

Though the heat flux sensor is used for control of lubrication with lubricating oil in the description above, it may be used for detection of abnormality in the bearing apparatus. For example, when a heat flux further increases in spite of lubrication by the lubricating oil supply unit, damage to the bearing may have occurred. In this case, controller 53 in Fig. 6 can be used as an "abnormality determination unit." The abnormality determination unit determines that abnormality has occurred in the bearing when heat flux Q or rate of change D in heat flux exceeds a threshold value larger than Qth or Dth shown in Fig. 16. The abnormality determination unit may make determination as to abnormality of the rolling bearing based on relation between rotation speed N and heat flux Q that follows the rotation speed. The abnormality determination unit may monitor relation between the rotation speed and the heat flux constantly or for a determined period, and when relation therebetween becomes inconsistent, it may determine that abnormality has occurred in the rolling bearing. For example, when the heat flux abruptly varies in spite of the rotation speed being constant, the abnormality determination unit determines that abnormality has occurred in the rolling bearing. For example, when the heat flux does not follow the rotation speed while the detected rotation speed is varying, the abnormality determination unit determines that abnormality has occurred in the rolling bearing. Instantaneous and abrupt heat generation in the rolling bearing can thus accurately be detected, and whether or not abnormality has occurred in the rolling bearing can be determined based on a result of detection. When the rolling bearing is determined as being abnormal, the bearing apparatus can be controlled to stop rotation thereof. In this case, controller 53 may give a notification about abnormality through a warning indicator or provide a stop signal for stopping rotation of the motor, instead of addition of lubricating oil in step S3 in the flowchart in Fig. 18. In this case, the abnormality determination unit may be arranged at another location, rather than in the spacer of the bearing.

It should be understood that the embodiments disclosed herein are illustrative and non-restrictive in every respect. The scope of the present invention is defined by the terms of the claims.

REFERENCE SIGNS LIST

1 spindle apparatus; 2 bearing jacket; 3, 506 housing; 4, 501 main spindle; 5, 5a, 5b, 5c, 5d, 16, 502 bearing; 5ga, 5gb, 508 outer ring; 5ia, Sib, 507 inner ring; 6, 31c, 31d, 106 spacer; 6g, 31gc, 31gd, 106g, 504 outer-ring spacer; 6gA, 31gAc, 31gAd inside surface; 6i inner-ring spacer; 6iA outside surface; 7a, 7b, 504b protrusion; 11, 11a, 11b, 11c, 11d heat flux sensor; 13 stator; 14 rotor; 15 cylindrical member; 22 space; 30, 30A, 130 bearing apparatus; 40, 140 lubricating oil supply unit; 41, 141, electric circuitry; 42 oil tank; 43 pump; 44a, 44b nozzle; 46 lid; 47 case; 50 motor; 51, 151 power supply; 52 drive apparatus; 53 controller; 56 temperature sensor; 57 vibration sensor; 58 rotation sensor; 67, 107 passage; 67a, 67b oil passage; 68 air discharge port; 101 electromagnetic valve; 102 mixing valve; 103 oil pump unit; 104 timer; 105 air passage; 154 power generator; 154d thermoelectric element; 154g, 154i heat sink; 155 power storage apparatus; 161, 163, 164 line; 162 processing circuit; 165 hole; 170 inner circumferential surface; 171 first surface; 172 raceway surface; 173 second surface; 506a inner housing; 506b outer housing; 507b inclined surface; 512 driving motor; 513 inner-ring press-fitting jig; 514 outer-ring press-fitting jig; 515 flow channel; 516 air-oil supply path; 517 air-oil supply port; 518 air-oil exhaust groove; 519 air-oil exhaust path; Rta, Rtb retainer; Ta, Tb rolling element

**Claims**

1. A lubricating oil supply unit (40) comprising:

   a holding portion (42) in which lubricating oil is held;
   a supply portion (43) that supplies lubricating oil held in the holding portion (42) to a bearing (5);
   a spacer (6) adjacent to the bearing (5); a heat flux sensor (11a, 11b) provided in the bearing (5) or the spacer (6); and
   a controller (53) that controls operations of the supply portion (43) in accordance with an output from the heat flux sensor (11a, 11b), wherein
   the holding portion (42), the supply portion (43), and the controller (53) are arranged in the spacer (6),
   the spacer (6) is provided with a lubricating oil passage (67a, 67b) for air-oil lubrication separately from lubrication with lubricating oil in the holding portion (42), and
   when the controller (53) detects insufficiency of lubricating oil supplied to the bearing (5) by the air-oil lubrication based on the output from the heat flux sensor (11a, 11b), the controller (53) drives the supply portion (43) to add lubricating oil.

2. The lubricating oil supply unit according to claim 1, wherein
   the controller (53) drives the supply portion (43) to supply lubricating oil to the bearing (5) when a rate of change in heat flux detected by the heat flux sensor (11a, 1 1b) exceeds a judgment criterion value.

3. The lubricating oil supply unit according to claim 1, wherein
   the controller (53) drives the supply portion (43) to supply lubricating oil to the bearing (5) when a heat flux detected by the heat flux sensor (11a, 11b) exceeds a judgment criterion value.

4. The lubricating oil supply unit according to any one of claims 1 to 3, wherein

   the bearing (5) is lubricated with grease, and
   when the controller (53) detects insufficiency of base oil of the grease based on the output from the heat flux sensor (11a, 11b), the controller controls the supply portion (43) to add lubricating oil.

5. The lubricating oil supply unit according to claim 1, further comprising a load sensor (59) that detects preload applied to the bearing or external load, wherein
   the controller (53) controls operation of the supply portion (43) in accordance with an output from the load sensor (59).

6. A bearing apparatus comprising:

   the lubricating oil supply unit (40) according to any one of claims 1 to 5; and
   the bearing (5).

**Patentansprüche**

1. Schmierölzuführeinheit (40), umfassend:

   einen Halteabschnitt (42), in welchem Schmieröl gehalten wird;
   einen Zuführabschnitt (43), der das in dem Halteabschnitt (42) befindliche Schmieröl einem Lager (5) zuführt;
   einen Abstandshalter (6) neben dem Lager (5);
   einen Wärmeflusssensor (11a, 11b), der in dem Lager (5) oder dem Abstandshalter (6) vorgesehen ist; und
   ein Steuergerät (53), das Arbeitsprozesse des Zuführabschnitts (43) in Übereinstimmung mit einer Ausgabe des Wärmeflusssensors (11a, 11b) steuert, wobei der Halteabschnitt (42), der Zuführabschnitt (43) und das Steuergerät (53) in dem Abstandshalter (6) angeordnet sind, der Abstandshalter (6) mit einer Schmierölpassage (67a, 67b) für die Luft-Öl-Schmierung getrennt von der Schmierung mit Schmieröl in dem Halteabschnitt (42) versehen ist, und
   wenn das Steuergerät (53) einen Mangel an Schmieröl feststellt, das dem Lager (5) durch die Luft-Öl-Schmierung auf der Grundlage der Ausgabe des Wärmeflusssensors (11a, 11b) zugeführt wird, steuert das Steuergerät (53) den Zuführabschnitt (43) an, um Schmieröl hinzuzufügen.

2. Schmierölzuführeinheit nach Anspruch 1, **dadurch gekennzeichnet, dass**
   das Steuergerät (53) den Zuführabschnitt (43) ansteuert, um dem Lager (5) Schmieröl zuzuführen, wenn eine Änderungsrate im Wärmefluss, die von dem Wärmeflusssensor (11a, 11b) festgestellt wird, einen Beurteilungskriteriums-Wert überschreitet.

3. Schmierölzuführeinheit nach Anspruch 1, **dadurch gekennzeichnet, dass**
   das Steuergerät (53) den Zuführabschnitt (43) ansteuert, um dem Lager (5) Schmieröl zuzuführen, wenn ein durch den Wärmeflusssensor (11a, 11b) festgestellter Wärmefluss einen Beurteilungskriteriums-Wert überschreitet.

4. Schmierölzufuhreinheit nach einem der Ansprüche 1 bis 3, wobei

das Lager (5) mit Schmierfett geschmiert ist, und das Steuergerät, wenn das Steuergerät (53) auf der Grundlage der Ausgabe des Wärmeflusssensors (11a, 11b) einen Mangel an Basisöl des Schmierfetts feststellt, den Zuführabschnitt (43) steuert, um Schmieröl hinzuzufügen.

5. Schmierölzuführeinheit nach Anspruch 1, des Weiteren umfassend

einen Lastsensor (59), der die auf das Lager ausgeübte Vorlast oder externe Last feststellt, wobei
das Steuergerät (53) den Betrieb des Zuführabschnitts (43) in Übereinstimmung mit einer Ausgabe des Lastsensors (59) steuert.

6. Lagervorrichtung, umfassend:
die Schmierölzuführeinheit (40) nach einem der Ansprüche 1 bis 5; und das Lager (5).

## Revendications

1. Unité d'alimentation en huile lubrifiante (40) comprenant :

une partie de maintien (42) dans laquelle de l'huile lubrifiante est maintenue ;
une partie d'alimentation (43) qui alimente l'huile lubrifiante maintenue dans la partie de maintien (42) à un roulement (5) ;
une entretoise (6) adjacente au roulement (5) ;
un capteur de flux thermique (11a, 11b) agencé dans le roulement (5) ou l'entretoise (6) ; et une commande (53) qui commande des opérations de la partie d'alimentation (43) en fonction d'une sortie du capteur de flux thermique (11a, 11b) ;
dans laquelle la partie de maintien (42), la partie d'alimentation (43) et la commande (53) sont agencées dans l'entretoise (6),
l'entretoise (6) est pourvue d'un passage d'huile lubrifiante (67a, 67b) pour une lubrification air-huile séparément d'une lubrification avec de l'huile lubrifiante dans la partie de maintien (42), et
lorsque la commande (53) détecte une insuffisance d'huile lubrifiante alimentée au roulement (5) par la lubrification air-huile sur la base de la sortie du capteur de flux thermique (11a, 11b), la commande (53) entraîne la partie d'alimentation (43) pour ajouter de l'huile lubrifiante.

2. Unité d'alimentation en huile lubrifiante selon la revendication 1, dans laquelle la commande (53) entraîne la partie d'alimentation (43) pour alimenter de l'huile lubrifiante au roulement (5) lorsqu'une vitesse de variation de flux thermique détectée par le capteur de flux thermique (11a, 11b) dépasse une valeur de critère de jugement.

3. Unité d'alimentation en huile lubrifiante selon la revendication 1, dans laquelle la commande (53) entraîne la partie d'alimentation (43) pour alimenter de l'huile lubrifiante au roulement (5) lorsqu'un flux thermique détecté par le capteur de flux thermique (11a, 11b) dépasse une valeur de critère de jugement.

4. Unité d'alimentation en huile lubrifiante selon l'une quelconque des revendications 1 à 3, dans laquelle

le roulement (5) est lubrifié avec de la graisse, et
lorsque la commande (53) détecte une insuffisance d'huile de base de la graisse sur la base de la sortie du capteur de flux thermique (11a, 11b), la commande commande la partie d'alimentation (43) pour ajouter de l'huile lubrifiante.

5. Unité d'alimentation en huile lubrifiante selon la revendication 1, comprenant en outre un capteur de charge (59) qui détecte une précharge appliquée au roulement ou une charge externe, dans laquelle la commande (53) commande le fonctionnement de la partie d'alimentation (43) en fonction d'une sortie du capteur de charge (59).

6. Appareil à roulement comportant :

l'unité d'alimentation en huile lubrifiante (40) selon l'une quelconque des revendications 1 à 5 ; et
le roulement (5).

FIG.1

FIG.2

**FIG.3**

FIG.4

FIG.5

FIG.6

<u>40</u>

# FIG.7

## FIG.8

| TESTED BEARING | $\phi 70 \times \phi 110 \times 20$<br>5S-2LA-HSE014 EQUIVALENT<br>(CERAMIC-BALL-INCORPORATING<br>SUPER-HIGH-SPEED ANGULAR CONTACT BALL<br>BEARING) |
|---|---|
| PRELOADING METHOD | FIXED POSITION PRELOADING<br>(MOUNTED PRELOAD OF 750 N) |
| ROTATION SPEED | $0 \sim 16000 \mathrm{min}^{-1}$ |
| LUBRICATION METHOD | AIR-OIL LUBRICATION |
| AMOUNT OF OIL FEED | 0.03mL/10min |
| LUBRICATING OIL | ISO VG32 |
| LUBRICATING AIR FLOW RATE | 30NL/min |
| BEARING JACKET COOLING | YES, SYNCHRONOUS WITH ROOM TEMPERATURE |
| SPINDLE ORIENTATION | HORIZONTAL |

FIG.9

FIG.10

FIG.11

## FIG.12

HIGH

↑

TEMPERATURE

T(TEMPERATURE)

L (FRICTION LOSS)

LARGE

↑

FRICTION LOSS

A ⫶ B ⫶ C ⫶ D ⫶ E

OIL AMOUNT ⟶ INCREASE

## FIG.13

HIGH-PRESSURE AIR ⟹ | ELECTROMAGNETIC VALVE ⌐101 | → | MIXING VALVE ⌐102 | 105

| OIL PUMP UNIT ⌐103 |

↑

| TIMER ⌐104 |

67

| LUBRICATING OIL SUPPLY UNIT ⌐40 |

6g⫽ OUTER-RING SPACER

} TO BEARING

## FIG.14

| TESTED BEARING | $\phi$70×$\phi$110×20<br>5S-2LA-HSE014  EQUIVALENT<br>(CERAMIC-BALL-INCORPORATING SUPER-HIGH-SPEED<br>ANGULAR CONTACT BALL BEARING) |
|---|---|
| PRELOADING METHOD | FIXED POSITION PRELOADING<br>(MOUNTED PRELOAD OF 750 N) |
| ROTATION SPEED | 18000min$^{-1}$ FIXED |
| LUBRICATION METHOD | INJECTION OF SEVERAL DROPS OF LUBRICATING OIL<br>ONLY AT THE TIME OF ASSEMBLY OF MAIN SPINDLE<br>(OIL NOT BEING FED DURING OPERATION OF MAIN SPINDLE) |
| AMOUNT OF OIL FEED | 0.03mL/10min |
| BEARING JACKET COOLING | YES, SYNCHRONOUS WITH ROOM TEMPERATURE |
| SPINDLE ORIENTATION | HORIZONTAL |

## FIG.15

FIG.16

## FIG.17

## FIG.18

FIG.19

FIG.20

FIG.21

FIG.22

# FIG.23

FIG.24

FIG.25

FIG.26

FIG.27

FIG.28

FIG.29

## FIG.30

## FIG.31

FIG.32

FIG.33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017026078 A

- WO 2018088227 A1